# EUROPEAN PATENT APPLICATION

(11) **EP 2 299 529 A1**
(43) Date of publication of application: **23.03.2011**
(21) Application number: 09773559.1
(22) Date of filing: 26.06.2009
(51) Int. Cl.: H01M 8/04, H01M 8/00, H01M 8/02, H01M 8/10

(54) **FUEL CELL HOUSING STRUCTURE, AND ELECTRONIC DEVICE**

(30) Priority: 04.07.2008 JP 2008175345
(71) Applicant: Sony Corporation, Tokyo 108-0075 (JP); Sony Ericsson Mobile Communications Japan, Inc., Tokyo 108-0075 (JP)
(72) Inventor: TAKAGI, Yuto, Tokyo 108-0075 (JP); TAKENAKA, Mikio, Tokyo 108-0075 (JP); SHIMURA, Jusuke, Tokyo 108-0075 (JP); SUZUKI, Katsuya, Tokyo 108-0075 (JP); SUZUKI, Kuniharu, Tokyo 108-0075 (JP); KATO, Hiroshi, Tokyo 108-0075 (JP); YAMAZAKI, Manabu, Tokyo 108-0075 (JP)
(74) Representative: Müller - Hoffmann & Partner
(86) International application number: PCT/JP2009/062167
(87) International publication number: WO 2010/001981

(57) **Abstract**

Heat generated from a fuel cell is released effectively. A fuel cell unit 400 is stored in a fuel cell storing part 201 on the inside of a lower case 200. A control circuit board 403 is mounted on an upper surface of the fuel cell unit 400, and a secondary battery 404 is mounted on the board 403. A heat transfer sheet 411 is attached to an anode plate of the fuel cell unit 400. A heat transfer sheet extension part 412 is joined to an end portion of the heat transfer sheet 411. The heat transfer sheet extension part 412 is provided to cover a reinforcement rib 207 and to extend to the inside of the lower case 200 of a fuel cartridge storing part 202. The heat transfer sheet extension part 412 is set in close contact with the inside of the case 200. Heat can be efficiently conducted from the fuel cell unit 400 to the lower case 200.

## Description

### Technical Field

The present invention relates to a storing structure for a fuel cell unit which generates electric power by being supplied with a liquid fuel, such as direct methanol fuel cell, and an electronic apparatus, particularly a mobile apparatus, in which a fuel cell unit is mounted.

### Background Art

Mobile apparatuses such as cellular phones, notebook-sized personal computers, portable audio-visual apparatuses, personal digital assistants (PDAs), etc. have been spreading rapidly. Attendant on the enhancement of functions of these mobile apparatuses, there has been an increasing demand for small-sized high-capacity power sources which enable the mobile apparatuses to be used for a longer time. At present, secondary batteries are used as the power sources. In regard of the secondary batteries, reductions in size and weight and enhancement of energy density are being advanced. In the mobile apparatuses, however, power consumptions are tending to increase due to the addition thereto of new functions such as a digital camera function, a function for reception of one-segment broadcasting, etc. Accordingly, there is a request for a power source for longer-time use as compared with secondary batteries.

Fuel cells are classified into various types, depending on differences in electrolyte and the like. As a representative type of fuel cell, there is known a polymer electrolyte fuel cell (PEFC) in which a solid polymer electrolyte is used as the cell electrolyte. The polymer electrolyte fuel cells are suited to use as driving power sources for electronic apparatuses because they can be manufactured at reduced costs, can be easily reduced in size, thickness and weight, and are high in cell performance, particularly in output density. The polymer electrode fuel cells include not only those in which hydrogen is used as fuel but also those comparatively newly developed ones in which methanol or natural gas is modified to produce hydrogen for use as fuel. In recent years, the direct methanol fuel cells (DMFCs) have been developed in which methanol is supplied directly to the fuel cell as fuel for power generation.

In the direct methanol fuel cell, a membrane and electrode assembly (MEA), having an electrolyte membrane and a pair of electrodes united on a base plate, and a flat plate-shaped separator, having a fuel channel at one-side surface and an oxidant gas channel at the other-side surface, are alternately stacked, and an aqueous methanol solution is supplied into the fuel channel whereas air is supplied into the oxidant gas channel, whereby a power generating reaction is effected on the electrolyte membrane. In the direct methanol fuel cell, water and carbon dioxide are generated as reaction products, and they are discharged.

There have been proposed an active-type (forced air intake type) fuel cell in which the supply of the fuel to the fuel cell and discharge of the power generating reaction products (water, carbon dioxide) are effected by use of an accessory such as a pump, and a passive-type (open-type) fuel cell in which natural diffusion of the aqueous methanol solution and air or the like is utilized and an accessory is not used. In the past, use of a fuel cell as a charging cradle (mount) for a cellular phone has been proposed by Japanese Patent No. 4005608.

Other than the system in which a secondary battery inside a cellular phone is charged by use of a fuel cell in the outside of the cellular phone as described in Japanese Patent No. 4005608, a system has recently been being put into practical use in which a fuel cell, for example, the above-mentioned direct methanol fuel cell, is incorporated in a cellular phone and is used as a power source for the cellular phone.

In the case of a fuel cell, the output voltage of a unit cell serving as a power generating part is low, and, therefore, a stack structure in which the membrane electrode assemblies and the separators are alternately stacked is adopted. The stack structure, however, is accompanied by an increase in the thickness of the fuel cell unit and is, therefore, not desirable as a power source for mobile apparatuses. In order to solve this problem, Japanese Patent Laid-open No. 2004-324012 describes a thin-type fuel cell unit of a structure in which a plurality of unit cells (unit fuel cells) are arranged two-dimensionally on a thermoplastic resin sheet and the plurality of unit cells are connected in series.

### Summary of the Invention

### Technical Problem

In the case of a thin-type fuel cell, for example, direct methanol fuel cell, an aqueous methanol solution as fuel is supplied from a fuel cartridge to a fuel electrode (hereinafter referred to as anode electrode). Oxygen (air) is supplied through an opening in an outer casing to an air electrode (hereinafter referred to as cathode electrode). It is necessary that the operating conditions such as the quantity of the aqueous methanol solution supplied, the quantity of air supplied, and power generation temperature are maintained in designed optimum states.

In the case of a mobile apparatus which is portable and in which components are mounted in high density, however, it may be difficult to keep the operating conditions optimum. One problem is generated when air is taken in. Specifically, at the time of intake of air from the exterior through a casing, if the open area ratio for air intake is not appropriate or if the opening for air intake is closed, the intake air quantity would become deficient, leading to a lowering in the output of the fuel cell.

Another problem is the problem of the heat generated in the fuel cell due to a reaction or the like. The heat generated by the fuel cell may persist inside the casing, whereby the temperature of the membrane and electrode assembly is raised, and the output of the fuel cell is lowered through drying.

Accordingly, it is an object of the present invention to provide a fuel cell storing structure, and an electronic apparatus, wherein operating conditions of a fuel cell can be favorably maintained as initially set.

### Technical Solution

In order to solve the above-mentioned problem, the present invention provides a fuel cell storing structure including:
a fuel cell which includes an anode electrode supplied with a fuel, a cathode electrode supplied with air, a membrane and electrode assembly held between the anode electrode and the cathode electrode, and an anode plate-shaped member stacked on the anode electrode;
a fuel supplying part configured to reserve the fuel and supply the anode electrode with the fuel;
a casing which defines a fuel cell storing space for storing the fuel cell; and
a heat transfer sheet one end portion of which is set in contact with an outer surface of the anode plate-shaped member and an other end portion of which is extended to the exterior of the fuel cell storing space and set in contact with an inner surface of the casing.

The present invention provides a fuel cell storing structure including:
a fuel cell which includes an anode electrode supplied with a fuel, a cathode electrode supplied with air, a membrane and electrode assembly held between the anode electrode and the cathode electrode, and a cathode plate-shaped member stacked on the cathode electrode and provided with an air vent hole;
a fuel supplying part configured to reserve the fuel and supply the anode electrode with the fuel;
a casing which defines a fuel cell storing space for storing the fuel cell; and
a metal film formed on an inner surface of that casing portion which faces the cathode plate-shaped member.

Preferably, a claw configured to press the cathode plate-shaped member against the metal film is provided in the fuel cell storing space.

Preferably, a claw configured to press the cathode plate-shaped member against the metal film through a heat-conductive elastic member is provided in the fuel cell storing space.

The present invention provides a fuel cell storing structure including:
a fuel cell which includes an anode electrode supplied with a fuel, a cathode electrode supplied with air, a membrane and electrode assembly held between the anode electrode and the cathode electrode, and an anode plate-shaped member stacked on the anode electrode;
a fuel supplying part configured to reserve the fuel and supply the anode electrode with the fuel;
a casing which defines a fuel cell storing space for storing the fuel cell;
a circuit board stacked on the anode plate-shaped member; and
an electric energy accumulating part stacked on the circuit board.

Preferably, one end portion of a heat transfer sheet is held between the anode plate-shaped member and the circuit board, and an other end portion of the heat transfer sheet is extended to the exterior of the fuel cell storing space and set in contact with an inner surface of the casing.

Preferably, a heat-conductive gel is packed between a surface on one side of the circuit board and an opposed surface.

The present invention provides an electronic apparatus including:
a fuel cell which includes an anode electrode supplied with a fuel, a cathode electrode supplied with air, a membrane and electrode assembly held between the anode electrode and the cathode electrode, and an anode plate-shaped member stacked on the anode electrode;
a fuel supplying part configured to reserve the fuel and supply the anode electrode with the fuel;
a casing which defines a fuel cell storing space for storing the fuel cell; and
a wiring board supporting thereon a circuit supplied with power source from the fuel cell,
   which are stored inside the casing;
   wherein one end portion of a heat transfer sheet is set in contact with an outer surface of the anode plate-shaped member, and an other end portion of the heat transfer sheet is extended to the exterior of the fuel cell storing space and set in contact with an inner surface of the casing.

The present invention provides an electronic apparatus including:
a fuel cell which includes an anode electrode supplied with a fuel, a cathode electrode supplied with air, a membrane and electrode assembly held between the anode electrode and the cathode electrode, and an anode plate-shaped member stacked on the anode electrode;
a fuel supplying part configured to reserve the fuel and supply the anode electrode with the fuel;
a casing which defines a fuel cell storing space for storing the fuel cell; and
a wiring board supporting thereon a circuit supplied with power source from the fuel cell,
   which are stored inside the casing;
   wherein a metal film making contact with the cathode plate-shaped member is formed on an inner surface of a portion of the casing.

The present invention provides an electronic apparatus including:
a fuel cell which includes an anode electrode supplied with a fuel, a cathode electrode supplied with air, a membrane and electrode assembly held between the anode electrode and the cathode electrode, and an anode plate-shaped member stacked on the anode electrode;
a fuel supplying part configured to reserve the fuel and supply the anode electrode with the fuel;
a casing which defines a fuel cell storing space for storing the fuel cell;
a circuit board stacked on the anode plate-shaped member; and
an electric energy accumulating part stacked on the circuit board.

The present invention provides a fuel cell storing structure including:
a fuel cell which includes an anode electrode supplied with a fuel, a cathode electrode supplied with air, a membrane and electrode assembly held between the anode electrode and the cathode electrode, and a cathode plate-shaped member stacked on the cathode electrode and provided with air vent holes;
a fuel supplying part configured to reserve the fuel and supply the anode electrode with the fuel;
a casing which defines a fuel cell storing space for storing the fuel cell;
an air intake hole formed in a casing portion facing the cathode plate-shaped member; and
a projection formed at an inner surface of the casing portion so as to secure a gap between the cathode plate-shaped member and the casing portion which face each other.

Preferably, the fuel cell has a plurality of rectangular power generating parts arranged two-dimensionally, the plurality of power generating parts being connected in series;
the air vent holes in the plurality of power generating parts are partitioned by a grid pattern; and
the projection is a grid pattern rib formed correspondingly to the grid pattern.

Preferably, another projection is further formed in each of regions in which the respective air vent holes of the plurality of power generating parts are formed, the another projection being formed correspondingly to a position where the air vent hole is not formed.

Preferably, a porous part is disposed between the cathode plate-shaped member and the casing portion which face each other.

The present invention provides an electronic apparatus including:
a fuel cell which includes an anode electrode supplied with a fuel, a cathode electrode supplied with air, a membrane and electrode assembly held between the anode electrode and the cathode electrode, and a cathode plate-shaped member stacked on the cathode electrode and provided with air vent holes;
a fuel supplying part configured to reserve the fuel and supply the anode electrode with the fuel; and
a wiring board supporting thereon a circuit supplied with power source from the fuel cell is mounted,
   which are stored inside a casing;
   wherein an air intake hole is formed in a casing portion facing the cathode plate-shaped member; and
   a projection configured to secure a gap between the cathode plate-shaped member and the casing portion which face each other is formed at an inner surface of the casing portion.

The present invention provides a fuel cell storing structure including:
a fuel cell which includes an anode electrode supplied with a fuel, a cathode electrode supplied with air, a membrane and electrode assembly held between the anode electrode and the cathode electrode, and a cathode plate-shaped member stacked on the cathode electrode and provided with an air vent hole;
a fuel supplying part configured to reserve the fuel and supply the anode electrode with the fuel;
a casing which defines a fuel cell storing space for storing the fuel cell;
an air intake hole formed in a casing portion facing the cathode plate-shaped member; and
a plurality of raised parts formed at an outer surface of the casing portion.

Preferably, the plurality of raised parts are provided in that region in the periphery of the casing portion in which the air intake hole is not formed.

Preferably, the raised parts are formed in the periphery of an operating part of an operating switch so as to be higher than the operating part.

The raised parts represent a mark, a character, or a symbol.

The present invention provides an electronic apparatus including:
a fuel cell which includes an anode electrode supplied with a fuel, a cathode electrode supplied with air, a membrane and electrode assembly held between the anode electrode and the cathode electrode, and a cathode plate-shaped member stacked on the cathode electrode and provided with an air vent hole;
a fuel supplying part configured to reserve the fuel and supply the anode electrode with the fuel;
a wiring board supporting thereon a circuit supplied with power source from the fuel cell,
   which are stored inside a casing;
   wherein an air intake hole is formed in a casing portion facing the cathode plate-shaped member; and
   a plurality of raised parts are formed at an outer surface of the casing portion.

### Advantageous Effects

According to the present invention, the operating conditions of a fuel cell can be kept in optimum states. The invention ensures that intake of air can be performed favorably. The invention ensures that release of heat from the fuel cell can be accelerated. Further, a fuel cartridge can be held securely. The residual fuel amount in the fuel cartridge can be checked easily.

### Brief Description of Drawings

FIG. 1 is an exploded perspective view of an embodiment of application of the present invention to a cellular phone.
FIG. 2 is a more detailed exploded perspective view of the embodiment of application of the present invention to the cellular phone.
FIG. 3 is a connection diagram showing the configuration of a hybrid power source.
FIGS. 4 show schematic diagrams illustrating schematically a fuel cartridge mounting mechanism.
FIG. 5 is a block diagram showing a configuration for fuel cell control.
FIG. 6 shows a plan view and a perspective view for illustrating in more detail the fuel cartridge mounting mechanism.
FIG. 7 shows a plan view and a perspective view for illustrating in more detail the fuel cartridge mounting mechanism.
FIG. 8 shows a plan view and a perspective view for illustrating in more detail a fuel cartridge storing part.
FIG. 9 is a perspective view showing an inner surface of a lower case.
FIG. 10 is an exploded perspective view of a fuel cartridge illumination unit.
FIGS. 11 show schematic diagrams to be used for illustrating a configuration for releasing the heat generated in a fuel cell unit.
FIGS. 12 show schematic diagrams to be used for illustrating a heat transfer sheet for releasing the heat generated in the fuel cell unit.
FIG. 13 is a perspective view showing the inner surface of the lower case in the condition in which the heat transfer sheet is provided.
FIGS. 14 show schematic diagrams to be used for illustrating a configuration in which the heat generated in the fuel cell unit is released through a metal film.
FIG. 15 is a schematic diagram to be used for illustrating a configuration in which the heat generated in the fuel cell unit is released in a thickness direction.
FIG. 16 is a plan view of the lower case.
FIG. 17 is a sectional view, taken along line T4-T4, of the lower case.
FIGS. 18 show schematic diagrams to be used for illustrating schematically a configuration for intake of air in the fuel cell unit.
FIGS. 19 show a plan view of the lower case and a plan view of a cathode plate, to be used for illustrating in more detail the configuration for intake of air in the fuel cell unit.
FIG. 20 is a plan view of the lower case.
FIG. 21 shows a sectional view taken along line T0-T0, a sectional view taken along line T1-T1 and a sectional view taken along line T2-T2, of the lower case.

### Mode for Carrying Out the Invention

Now, one embodiment of the present invention will be described below, referring to the drawings. Incidentally, while the embodiment described below is a preferable specific example of the present invention and is accompanied by various restrictions which are preferable technically, the scope of the invention is not to be limited to or by the embodiment, unless it is especially described in the following description that the restriction is limitative of the invention.

### [General structure of cellular phone]

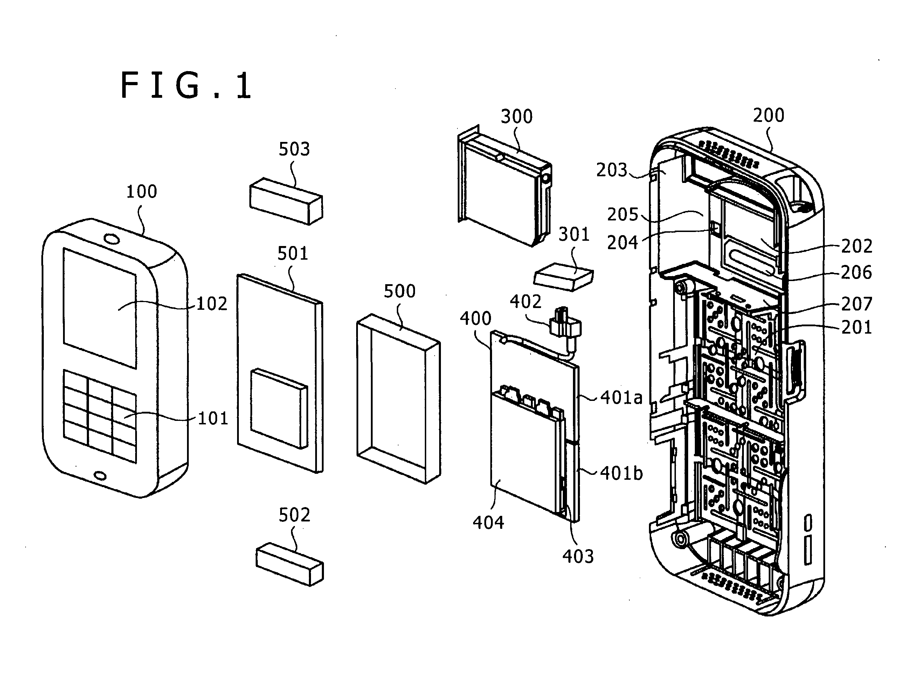

One embodiment of the present invention is a cellular phone in which a direct methanol fuel cell is incorporated as a fuel cell. As shown in FIG. 1, the cellular phone has a box-shaped outer casing configured by combining an upper case 100 and a lower case 200, which are moldings, and connecting the cases by screws (not shown). Incidentally, this embodiment is an example of application of the present invention to a so-called straight type cellular phone, the invention can be applied also to folded-double type and slider type cellular phones.

A key operating part 101 and a liquid crystal display 102 are mounted to the upper case 100. In practice, the key operating part 101 and the liquid crystal display 102 are preliminarily assembled as respective units, and the key operating part unit and the liquid crystal display unit are mounted to the upper case 100.

A fuel cell unit storing part 201 as a space for storing a fuel cell unit therein and a fuel cartridge storing part 202 as a space for storing a fuel cartridge therein are provided on the back side of a principal surface of the lower case 200. The fuel cell unit storing part 201 and the fuel cartridge storing part 202 are partitioned from each other by a lower case reinforcement rib 207. The lower case 200 defining the fuel cell unit storing part 201 is integrally provided with a multiplicity of small holes for intake of air into the fuel cell, a rib for securing strength of the casing, and the like. The fuel cartridge 300 is inserted into the fuel cartridge storing part 202 through an insertion port 203 provided in a side surface of the lower case 200.

The fuel cartridge 300 is formed from a light-transmitting synthetic resin material, and has a box-like shape which is comparatively small in thickness. An aqueous methanol solution as a fuel is enclosed in the inside of the fuel cartridge 300. The residual amount of the fuel in the fuel cartridge 300 can be externally checked through a residual fuel amount check window 206. In this case, for easy checking of the residual amount, an illumination unit 301 is provided in the vicinity of the fuel cartridge storing part 202.

The fuel cell unit 400 includes two plate-shaped fuel cells 401a and 401b. Each of the fuel cells has a configuration in which, for example, six power generating parts are arranged two-dimensionally and are connected in series with one another. In the power generating parts, membrane electrode assemblies each of which has a structure in which an electrolyte membrane is held between an anode electrode and a cathode electrode are connected to one another while using an insulating sheet or the like, each of the membrane electrode assemblies is further held between a cathode plate (cathode plate-shaped member) and an anode plate (anode plate-shaped member) composed of a current collector and an insulating layer, and a fuel pump for supplying the fuel to the anode electrode is provided. As the current collector, a punching metal or mesh of stainless steel, aluminum or the like is used.

A fuel supply pipe 402 is provided for supplying the fuel from the fuel cartridge 300 to the fuel cell unit 400. A fuel cell control circuit board 403 is stacked on the fuel cell unit 400, and a secondary battery (e.g., lithium ion secondary battery using a polymer electrolyte) 404 is stacked on the fuel cell control circuit board 403. This embodiment is configured to be of the hybrid power source type in which both the fuel cell unit 400 and the secondary battery 404 are used as a power source. An electric double layer capacitor may be used in place of the secondary battery 404. The secondary battery 404 or the electric double layer capacitor functions as an electric energy accumulating part.

A main substrate 501 is mounted to the secondary battery 404 through a frame 500. The frame 500 is a resin molding, and is provided for holding the secondary battery 404, protecting the main substrate 501, and the like purposes. Circuit components needed for a cellular phone, such as a radio circuit, a signal processing LSI, a control CPU (Central Processing Unit), a memory, a liquid crystal display driving circuit, a one-segment broadcasting reception circuit, etc. are mounted on the main substrate 500. A main antenna unit 502 and a sub antenna unit 503 are disposed respectively at both end portions of the main substrate 501. For instance, the main antenna unit 502 is for the cellular phone, and the sub antenna unit 503 is for the one-segment broadcasting reception.

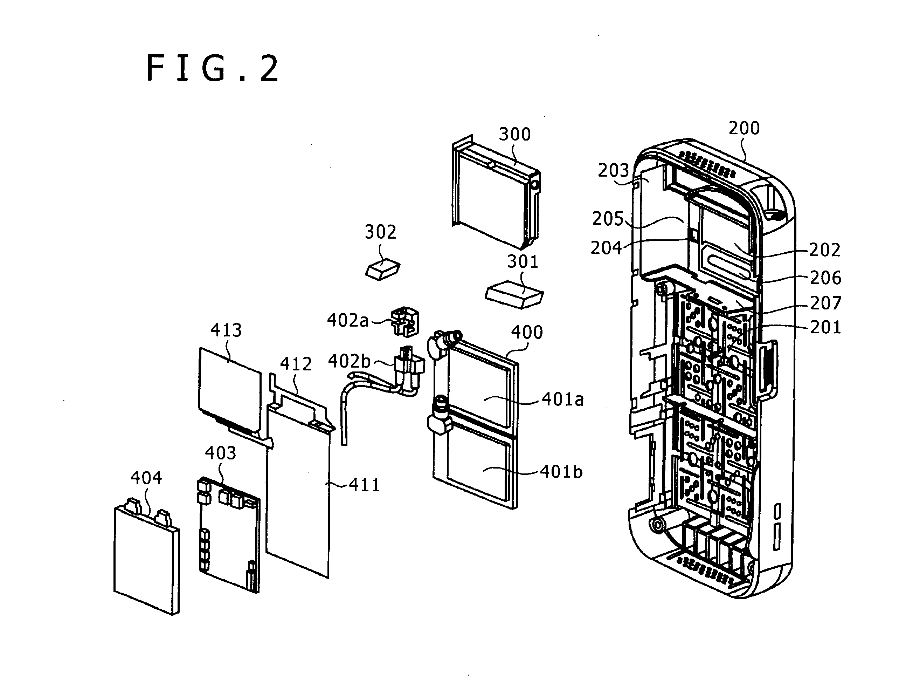

FIG. 2 shows more in detail a part of this embodiment of the present invention. A fuel cartridge detection switch 302 is provided for detecting that the fuel cartridge 300 has been mounted into the casing. When the mounting of the fuel cartridge is detected by turning-ON of the fuel cartridge detection switch 302, the pump in the fuel cell unit 400 is started operating, and a power generating operation is started.

A pipe connection part 402a for supplying the fuel from the fuel cartridge 300 to the fuel cell unit 400, and a pipe branching part 402b for supplying the fuel to the two fuel cells 401a and 401b, are provided. A fuel supply pipe 402 is composed of the pipe connection part 402a and the pipe branching part 402b. As an example, a configuration may be mentioned in which supply of the fuel is conducted by a pump provided in each fuel cell, while intake of air is conducted by natural diffusion.

A heat transfer sheet 411 is disposed in contact with the anode plate in the fuel cell unit 400. The heat transfer sheet 411 is so sized as to make contact with the whole area of the anode sheet in the fuel cell unit 400. A heat transfer sheet extension part 412 is provided at one end of the heat transfer sheet 411. Further, a heat transfer sheet 413 connected to the heat transfer sheet 411 is provided. The heat transfer sheets 411, 412 and 413 are provided for releasing the heat generated in the fuel cell unit 400. Specifically, the heat generated in the fuel cell unit 400 is released to a low-temperature portion of the lower case 200 through the heat transfer sheets 411 and 412, and, simultaneously, the heat is released to a low-temperature portion of the main substrate 501 through the heat transfer sheets 411 and 413.

The fuel cell control circuit board 403 and the secondary battery 404 are sequentially stacked on that surface of the fuel cell unit 400 which is on the anode plate side, with the heat transfer sheet 411 sandwiched therebetween. Incidentally, in FIG. 2, the frame 500, the main substrate 501, the main antenna unit 502, the sub antenna unit 503, and the upper case 100 are omitted from the drawing.

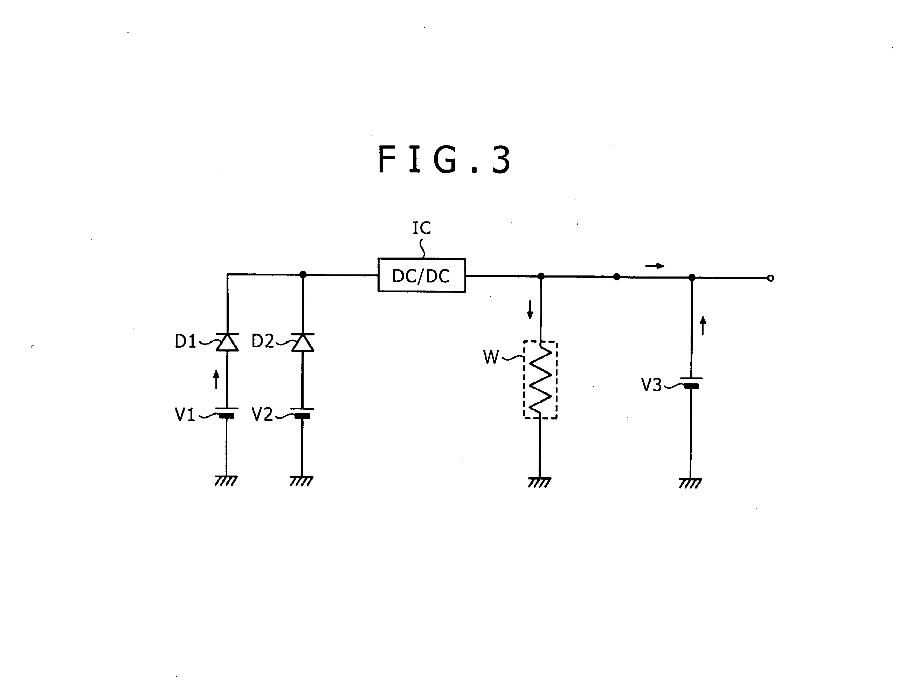

As shown in FIG. 3, a cell V1 and a reverse current preventive diode D1 corresponding to the fuel cell 401a are connected in series with each other, whereas a cell V2 and a reverse current preventive diode D2 corresponding to the fuel cell 401b are connected in series with each other. The voltage of each of the cells V1 and V2 is, for example, about 1.8 to 2.4 V. These series connections are connected in parallel with each other, and one end of the parallel connection is connected to an input terminal of a DC-DC converter (IC). A load W and the secondary battery, for example, a lithium ion secondary battery V3 using a polymer electrolyte are connected, in parallel, to an output terminal of the DC-DC converter (IC).

The DC-DC converter (IC) boosts an input voltage from one of the fuel cells V1 and V2 to a voltage of about 4 V, which is approximately equal to the voltage of the secondary battery V3. When a load current is small, a current is supplied from the fuel cell V1 or V2 to the load W, and, simultaneously, a charging current is supplied to the secondary battery V3. When the load current is large, the output voltage of the fuel cells is lowered, and efficiency is lowered. In such an instance, therefore, the load current is supplied from the secondary battery V3. In this manner, by the hybrid configuration using the fuel cell and the secondary battery, it is possible to cope with a rapid increase in load current and to prevent the power source device from being enlarged.

### [Mounting, holding, and illumination of fuel cartridge]

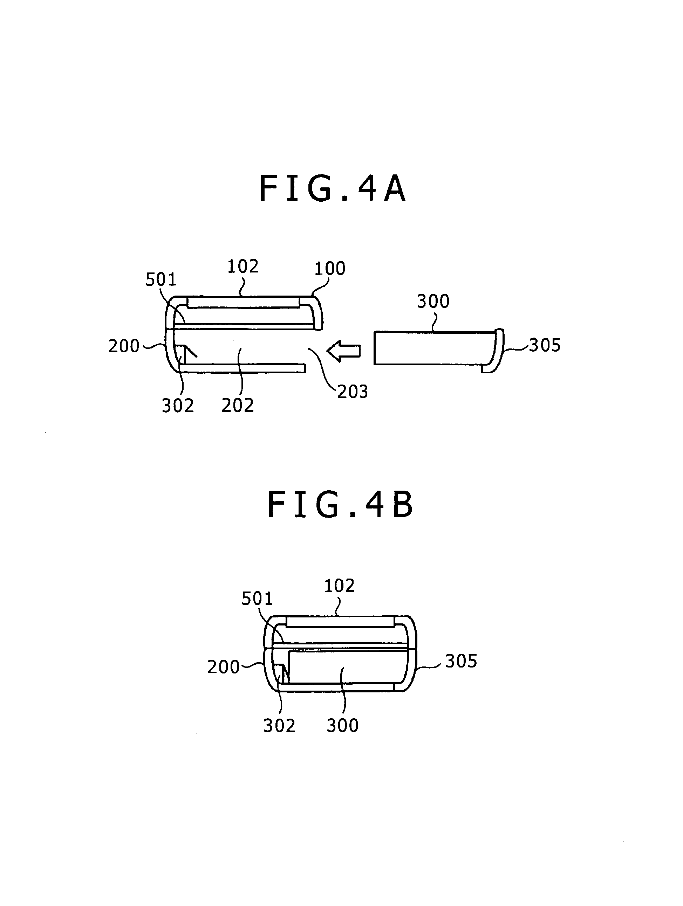

As schematically shown in FIG. 4A and FIG. 4B, the fuel cartridge 300 is inserted into the fuel cartridge storing part 202 through the insertion port 203 provided in the side surface of the lower case 200. The fuel cartridge 300 is provided with a fuel supply port at, for example, its end face on the front side with respect to its insertion direction, and the lower case 200 is provided with a fuel cell receiving port at its inner surface which faces the just-mentioned end face. The fuel is supplied from the fuel cell receiving port to the fuel cell unit 400 through the fuel supply pipe 402.

As will be described later, the fuel cartridge 300 is provided at its one face with a step extending in the insertion direction so that the fuel cartridge 300 can be inserted only when it is oriented properly in relation to the insertion port 203. The fuel cartridge detection switch 302 is provided in the fuel cartridge storing part 202. An operating part of the detection switch 302 is depressed by an end face of the fuel cartridge 300 inserted, whereby the mounting of the fuel cartridge 300 is detected. Other than the configuration in which the operating part is depressed by the end face, a configuration may also be adopted in which the operating part of the detection switch is operated by an upper surface of the fuel cartridge 300.

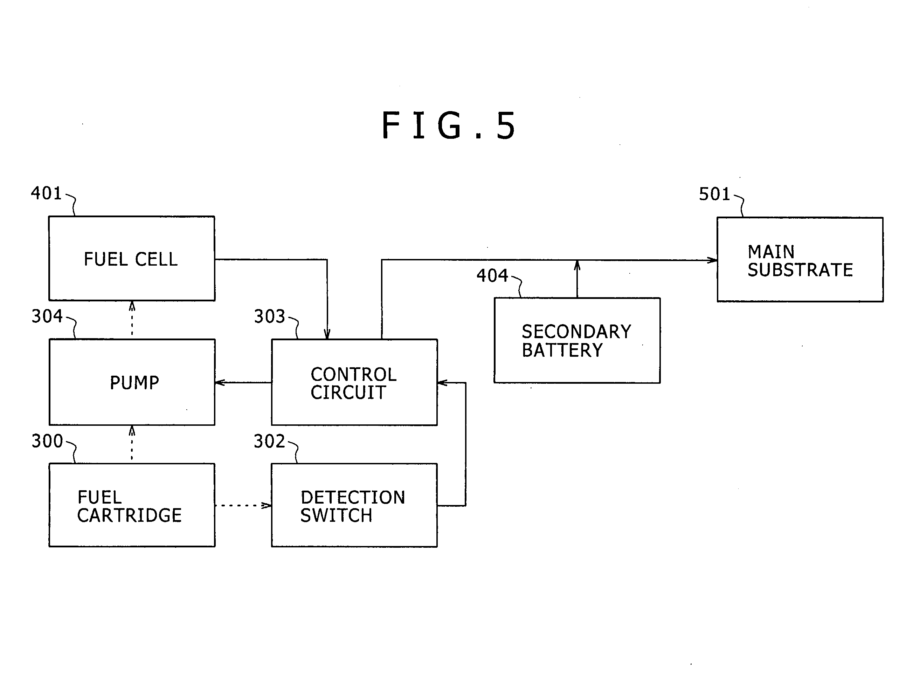

As shown in FIG. 5, a signal indicating that the detection switch 302 is changed into an ON state is supplied to a control circuit 303. The control circuit 303 is mounted on the fuel cell control circuit board 403. When a detection signal is inputted to the control circuit 303 from the detection switch 302 and the mounting of the fuel cartridge 300 is thereby detected, the control circuit 303 starts an operation of the pump 304. The fuel in the fuel cartridge 300 is supplied to the fuel cells 401 (the fuel cells 401a, 401b) by the pump 304, and power generation is started.

An output of the fuel cell 401 is inputted to the control circuit 303, and is boosted to a predetermined output voltage by the DC-DC converter, as above-mentioned. An output voltage from the control circuit 303 and an output voltage of the secondary battery 404 are supplied, in parallel, to a load on the main substrate 501. By the structure in which the fuel cartridge detection switch 302 is provided and the detection signal is supplied to the control circuit 303, a situation in which the pump 304 is operated in the absence of the fuel cartridge 300 mounted in position and which leads to degradation of the performance of the power generating parts in the fuel cell 401 is prevented from occurring.

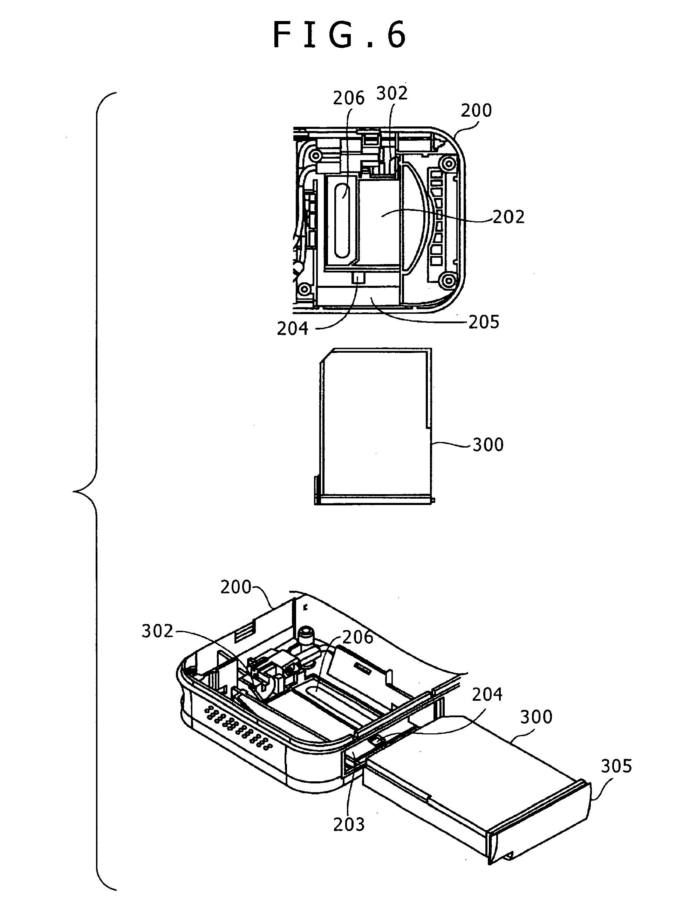

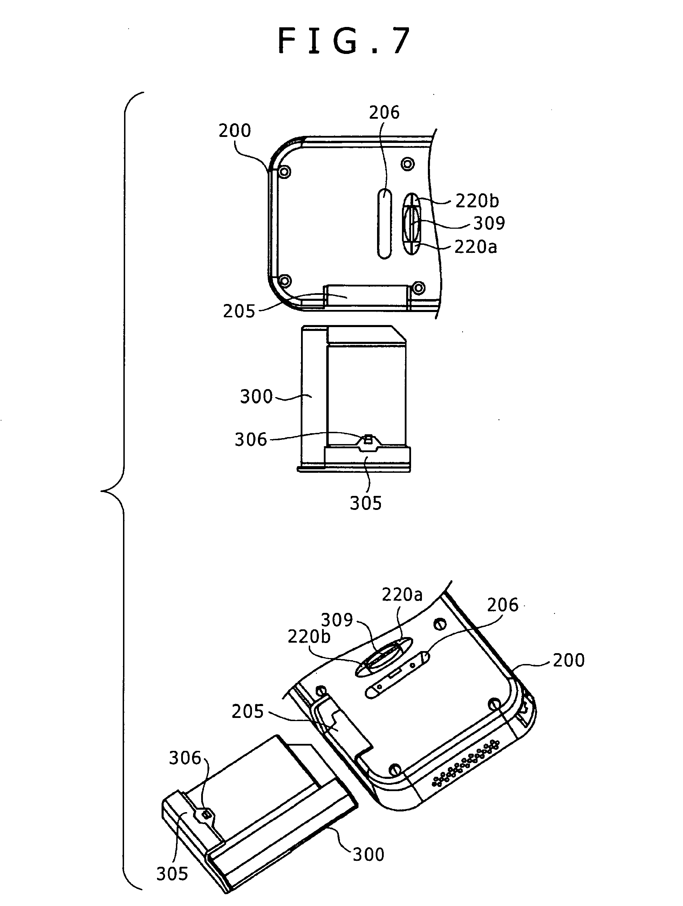

As shown in detail in FIGS. 6 and 7, an auxiliary member 305 roughly L-shaped in section (or roughly angular U-shaped in section) is secured to an end face, on the rear side with respect to the insertion direction, of the fuel cartridge 300. The auxiliary member 305 is, for example, a plastic molding, which is the same as or similar to the lower case 200 in color and texture. The auxiliary member 305 has a function as a stopper at the time of insertion of the fuel cartridge 300, whereby insertion in the reverse direction is prevented. The lower case 200 is provided with the fuel cartridge insertion port 203, which is extended to a part of an upper surface, to form a window part 205. In the condition where the fuel cartridge 300 is mounted in the cellular phone, the auxiliary member 305 is exposed to the exterior through the window part 205. Since the auxiliary member 305 is the same as or similar to the lower case 200 in color and texture, a sense of discomfort can be lessened even though the auxiliary member 305 is visible externally.

Further, the auxiliary member 305 is provided, at its portion for contact with the upper surface of the fuel cartridge 300, with a claw 306 which is elastic and functions as a lock part. The lower case 200 is provided, near the window part 205, with a lock receiving part (e.g., a recessed shape) 204. Upon mounting of the fuel cartridge 300, the claw 306 gets into the claw receiving part 204, whereby the mounted state of the fuel cartridge 300 is securely held, and the fuel cartridge 300 can be prevented from chattering or slipping off. In the case of taking the fuel cartridge 300 out of the cellular phone, the auxiliary member 305 of the fuel cartridge 300 is pushed down through the window part 205, whereby the locking between the claw 306 and the claw receiving part 204 is released.

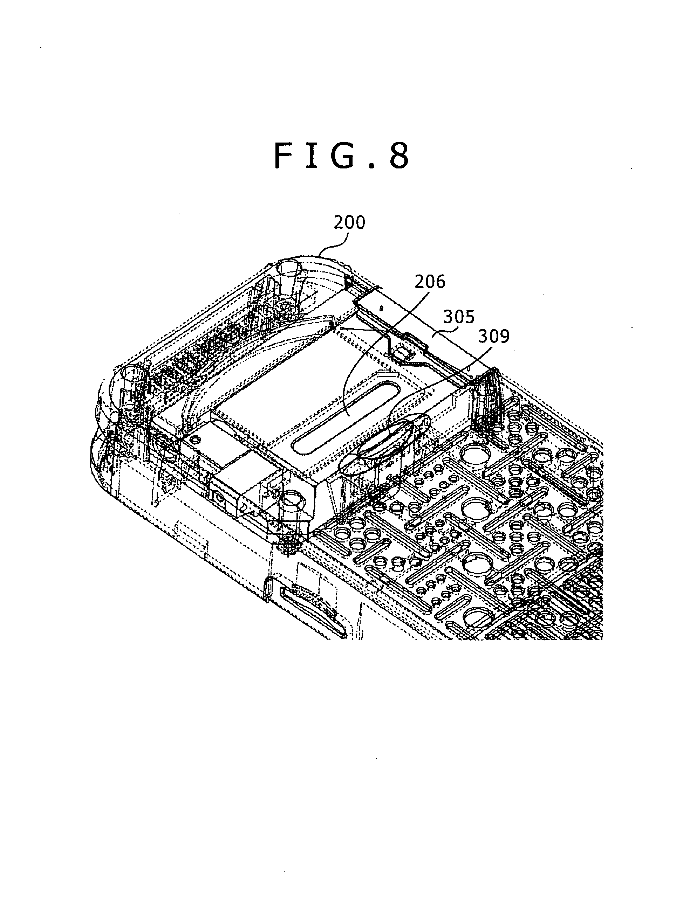

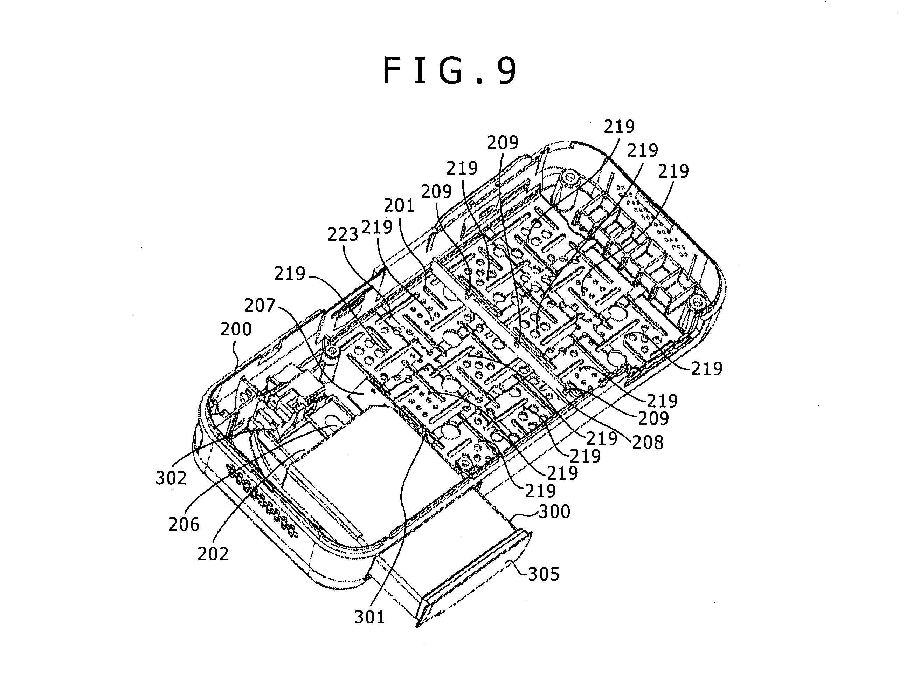

As shown in FIGS. 8 and 9, the lower case 200 is provided with the residual fuel amount check window 206 which is slot-like in shape, and, if necessary, a transparent plastic is attached to the residual fuel amount check window 206. The fuel cartridge 300 is formed from a synthetic resin which would not denatured by the fuel, and is made to have a transmittance of not less than 50% (preferably, not less than 80%). The residual amount of the fuel can be checked through the residual fuel amount check window 206. For easy checking of the residual amount, an illumination unit 301 is mounted to the lower case 200 at a position in the vicinity of the reinforcement rib 207.

Incidentally, in the fuel cell storing part 202 of the lower case 200, as shown in FIG. 9, a fuel cell holding rib 208 is disposed so as to partition the spaces for the fuel cells 401a and 401b from each other. That edge of the rib 208 which faces the upper case 100 is provided with notches 209 at three positions. The notches 209 are holes for exhausting carbon dioxide CO₂ which is generated at the anode electrodes of the fuel cells 401a and 401b and discharged from lateral sides.

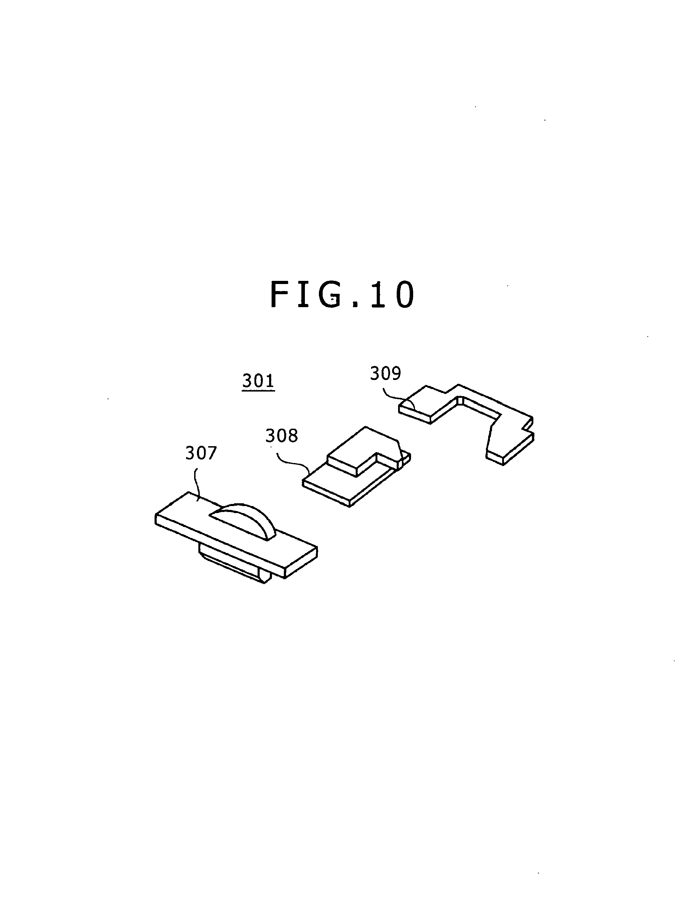

As shown in FIG. 10, the illumination unit 301 has an illumination unit substrate 308 supported on a substrate holder 307. A light emitting diode, a light emitting diode driving circuit, an illumination switch and the like are mounted on the illumination unit substrate 308. The illumination switch is for controlling the ON/OFF state of the light emitting diode, and a operating button 309 of the illumination switch is protruded from the lower case 200 to the exterior. Illumination light from the light emitting diode illuminates the interior of the fuel cartridge 300 through a side surface of the fuel cartridge 300. The layout position of the light emitting diode is set to be in the vicinity of the side surface of the fuel cartridge 300 and on the side closer to a bottom surface of the lower case 200. The position of the residual fuel amount check window 206 is preferably near the side surface on the side on which the light emitting diode is provided.

When the operating button 309 is depressed by the user at the time of checking the residual fuel amount, the illumination switch is turned ON, and the light emitting diode of the illumination unit 301 is turned ON. A structure is adopted in which the illumination light from the light emitting diode illuminates the fuel cartridge 300 from the side surface and is reflected by an inner surface of the casing. The light from the light emitting diode is diffused by the fuel in the fuel cartridge 300, so that the part of the fuel becomes bright. Consequently, the residual amount can be easily checked through the residual fuel amount check window 206. If the light emitting element is provided on the bottom surface side of the fuel cartridge 300, the problem of an increase in thickness would arise. In the present embodiment, illumination from a lateral side is adopted, so that an increase in thickness can be avoided. Furthermore, since the residual amount of the fuel can be checked in the condition where the fuel cartridge 300 is mounted in the cellular phone, it is unnecessary to dismount the fuel cartridge for the purpose of checking the residual fuel amount.

### [Release of heat from fuel cell]

The fuel cells 401a and 401b generate heat upon reactions therein. If the heat persists inside the casing of the cellular phone, a problem arises would arise in which the membrane and electrode assembly is brought to a temperature higher than an appropriate temperature, and the membrane electrode assembly is dried, leading to a lowering in the output voltage. Furthermore, a situation in which the casing is brought to a high temperature is dangerous. Therefore, it is necessary to release (dissipate) the heat generated in the fuel cell unit 400. In one embodiment, a configuration is adopted in which the heat generated in the fuel cell unit 400 is transferred to the casing (the upper case 100 and the lower case 200), preferably, to a comparatively low temperature portion of the casing, and is then radiated from the casing to the exterior.

For releasing the heat, good heat transfer between the fuel cell unit 400 and the casing must be secured. For accelerating the release of heat from the fuel cell unit 400, there are a configuration in which an electrically insulating heat transfer sheet is used and a configuration in which the inner surface of the lower case 200 is plated with a metal having good thermal conductivity, for example, copper and heat is released through the copper plating.

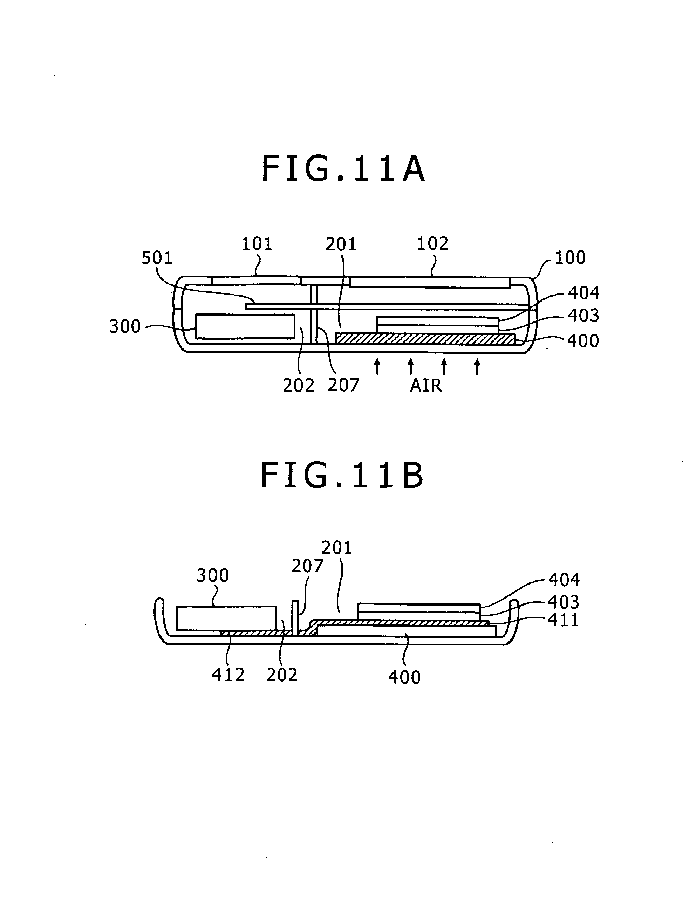

FIG. 11A schematically shows a section of the cellular phone. The fuel cell unit 400 is stored in the fuel cell storing part 201 inside the lower case 200, and the fuel cartridge 300 is stored in the fuel cartridge storing part 202. The lower case reinforcement rib 207 plate-like in shape is provided between the fuel cell storing part 201 and the fuel cartridge storing part 202. The fuel cell control circuit board 403 is mounted on the upper surface of the fuel cell unit 400, and the secondary battery 404 is mounted on the board 403. The main substrate 501 is disposed on the upper side of the secondary battery 404 and the fuel cartridge 300. Further, the upper case 100 fitted with the key operating part 101 and the liquid crystal display 102 is provided.

As shown in FIG. 11B, the heat transfer sheet 411 is adhered to the anode plate side of the fuel cell unit 400 by, for example, a heat transfer double-sided adhesive tape having good thermal conductivity, or the like. The heat transfer sheet extension part 412 is joined to an end portion of the heat transfer sheet 411. The heat transfer sheet extension part 412 is provided to cover the reinforcement rib 207 and to extend to the inner side of the lower case 200 at the fuel cartridge storing part 202. The heat transfer sheet extension part 412 is put in close contact with the inner side of the case 200.

As each of the transfer sheet 411 and the extension part 412, for example, a heat-conductive graphite sheet can be used. The heat-conductive graphite sheet is made of graphite, of which thermal conductivity in the plane directions is higher than thermal conductivity in the thickness direction, and by which heat can be efficiently conducted from the fuel cell unit 400 to the lower case 200. That part of the lower case 200 which is put in close contact with the inner side of the heat transfer sheet extension part 412 is on the lower side of the storing part 202 for the fuel cartridge 300. In addition, an end portion of the main substrate 501 is located on the upper side of that part. Therefore, no heat generating part is present in the vicinity of that part. Accordingly, that part is a comparatively low temperature portion. By transferring the heat to the low temperature portion of the casing, the heat can be released effectively.

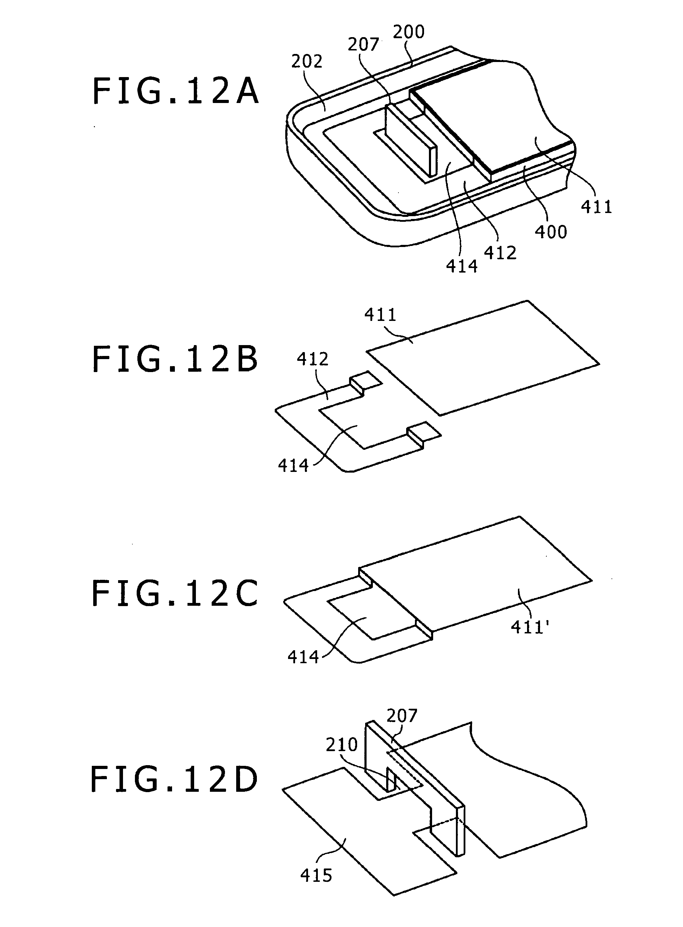

As shown in FIG. 12A and FIG. 12B, the heat transfer sheet extension part 412 is provided with a cutout 414, by which the reinforcement rib 207 is avoided, and heat is conducted to the inner side of the lower case 200 at the fuel cartridge storing part 202. A configuration may be adopted in which the heat transfer sheet 411 and the heat transfer sheet extension part 412 are not separate parts but they are provided integrally as a heat transfer sheet 411' (see FIG. 12C).

Further, a configuration may be adopted in which, as shown in FIG. 12D, a through-hole 210 is formed in a lower portion of the reinforcement rib 207, and the heat transfer sheet extension part 415 is extended by way of the through-hole 210 to the inner side of the lower case 200. The heat transfer sheet extension part 415 has a reduced width portion having a width smaller than the width of the through-hole 210.

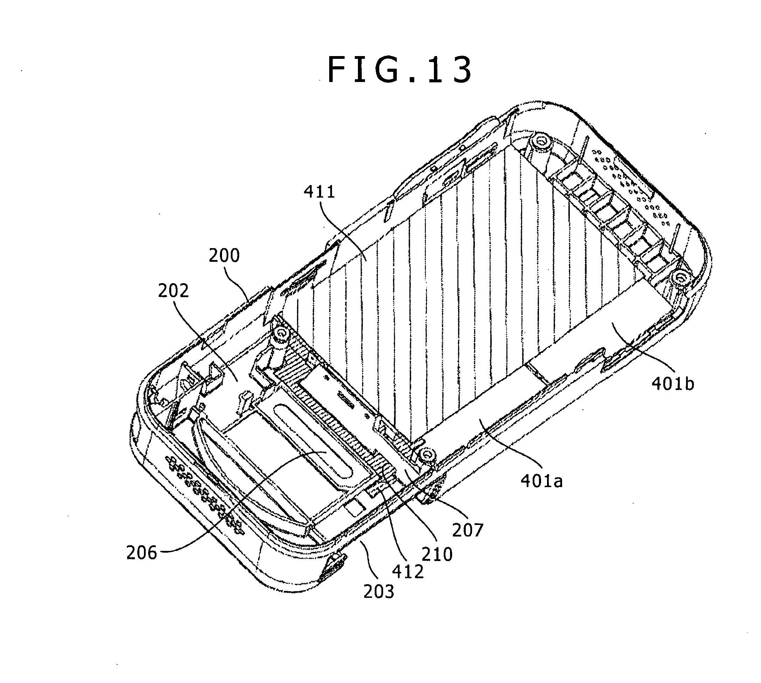

As shown in FIG. 13, in one embodiment, like in the configuration shown in FIG. 12D, the rib 207 is provided with a through-hole 210, the heat transfer sheet extension part 412 joined to the heat transfer sheet 411 is passed via the through-hole 210 and put in close contact with the inner side of the lower case at the fuel cartridge storing part 202. Incidentally, in FIG. 13, for simplification, the above-mentioned illumination unit 301 and fuel cartridge detection switch 302 are omitted from the drawing.

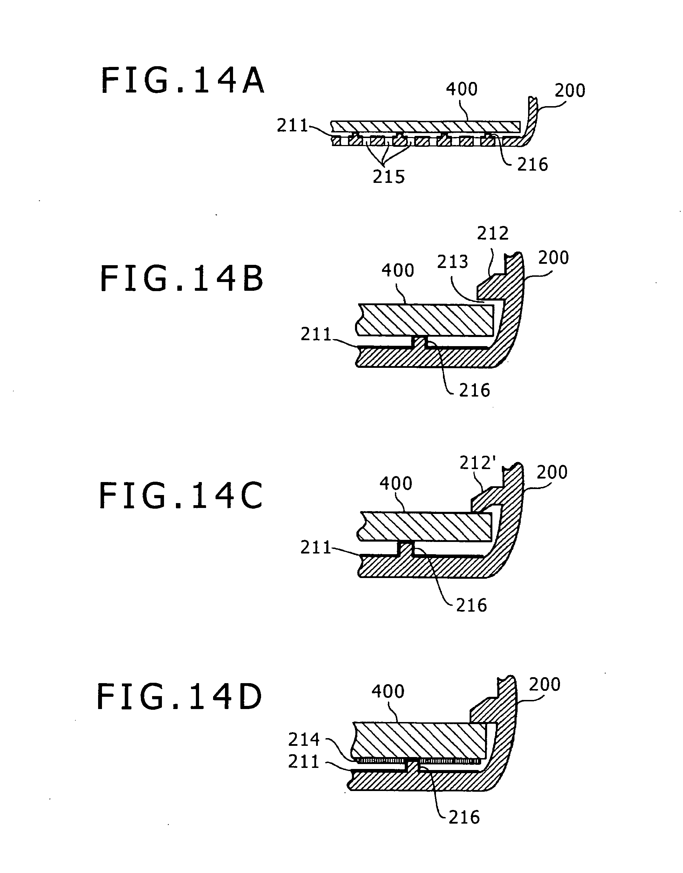

As another configuration for heat release, a configuration will be described in which the inner surface of the lower case 200 is plated with a metal having good thermal conductivity, for example, copper. As schematically shown in FIGS. 14, a metal film 211 of a metal having high thermal conductivity, such as copper, is formed on the whole part of the bottom surface and side surfaces of the lower case 200 by chemical plating, vacuum evaporation plating or the like. The cathode plate of the fuel cell unit 400 is set in contact with the metal film 211, and the heat generated in the fuel cell unit 400 is released (dissipated) through the metal film 211 and the lower case 200.

In the example shown in FIGS. 14, a plurality of projections 216 are formed at the inner surface of the lower case 200 so that the cathode plate of the fuel cell unit 400 make contact with the metal film 211 at top portions of the projections 216. Since the metal film 211 is formed over the whole surface on the inner side of the lower case 200, heat is released through the lower case 200 not only at the fuel cell storing part 201 but also at the fuel cartridge storing part 202. The metal film 211 is separated at the part where the lower case reinforcement rib 207 is provided. In this case, the metal films 211 are thermally integrally united by a heat transfer sheet or the like.

In order that the heat generated in the fuel cell unit 400 is effectively released (dissipated) through the metal film 211 and the lower case 200, it is necessary for the fuel cell unit 400 and the metal film 211 to be in close contact with each other. As shown in FIG. 14B, a plurality of lock claws 212 are provided on the inner side of side surfaces of the lower case 200, and the fuel cell unit 400 is fixed by the lock claws 212.

As another configuration, as shown in FIG. 14C, lock claws 212' so shaped as to hold down the fuel cell unit 400 to the side of the metal film 211 are provided at a plurality of positions on the inner side of the side surfaces of the lower case 200. Further, as shown in FIG. 14D, a heat transfer gel sheet 214 provided with a multiplicity of holes so as not to hinder intake of air is interposed between the inner surface of the lower case 200 provided with the metal film 211 and the cathode-plate-side surface of the fuel cell unit 400. The heat transfer gel sheet 214 is an elastic member which has high thermal conduction properties like the heat transfer sheet and which is low in resilience. Therefore, the ruggedness (projections and recesses) present in the inner surface of the lower case 200 is absorbed by the heat transfer gel sheet 214, and the fuel cell unit 400 is assuredly put in close contact with the metal film 211 by the lock claws 212.

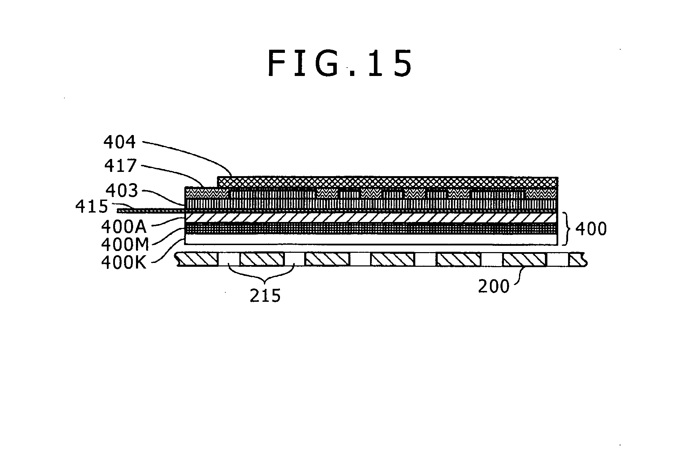

As shown in FIG. 15, the heat transfer sheet 415 is disposed between the surface of an anode plate 400A of the fuel cell unit 400 and that surface of the fuel cell control circuit board 403 on which the component parts are not mounted. The anode plate 400A and the heat transfer sheet 415 make contact with each other. The fuel cell unit 400 has the configuration in which a membrane and electrode assembly 400M is held between a cathode plate 400K and the anode plate 400A. The cathode plate 400K is covered by the lower case 200 provided with air intake holes 215. The heat transfer sheet 415 has high thermal conductivity both in the plane directions and in the thickness direction. The heat transfer sheet 415 is put in close contact with the inner side of the lower case 200, like the heat transfer sheet 411 and the extension part 412 in FIG. 13.

Further, a heat transfer gel sheet 417 is disposed between the fuel cell control circuit board 403 and the secondary battery 404. The parts mounting surface of the fuel cell control circuit board 403 has ruggedness (projections and recesses) in an extent of about 1 mm. Therefore, even when the fuel cell control circuit board 403 and the secondary battery 404 are in contact with each other, heat is little conducted therebetween. The heat transfer gel sheet 417 is used as a heat transfer blank material for absorbing the ruggedness (projection and recesses). The heat transfer gel sheet 417 has high thermal conductivity in the thickness direction.

As the heat transfer blank material, there can be used elastomers such as silicone, rubber, etc. and gelled blank materials. Further, blank materials obtained by admixing these blank materials with carbon or a metal such as aluminum so as to enhance thermal conductivity can also be used. As for the hardness of the blank material after mounting in position, the blank material may be kept in the gel form or may be solidified. As for the configuration of the blank material, an electrically insulating sheet or an insulating layer is provided on the surface of the blank material. A sheet-shaped processed product or a material to be packed between the circuit board 403 and the secondary battery 404 is used. Furthermore, the circuit board 403 and the secondary battery 404 may be united by integral molding or by filling (packing).

Thus, the heat generated in the fuel cell unit 400 is released through the heat transfer sheet 415 to the lower case 200. In addition, the heat is released (dissipated) in the thickness direction through the heat transfer sheet 415, the fuel cell control circuit board 403 and the heat transfer gel sheet 417 and through the secondary battery 404. Furthermore, although the secondary battery 404 is lowered in performance in a low-temperature environment, the transfer of the heat arising from the fuel cell to the secondary battery 404 makes it possible to prevent the performance from being lowered.

As above-mentioned, the heat generated in the fuel cell unit 400 is transmitted to the comparatively low temperature portion of the casing through the heat transfer blank material, such as the heat transfer sheet 411, or through the metal film 211, and is radiated from the casing to the exterior. Further, with the heat transmitted to the secondary battery 404 in the thickness direction, the release (dissipation) of heat is accelerated. All of these configurations for release of heat may not necessarily be adopted. For example, as the configuration for heat transfer to the casing, one of the heat transfer sheet and the metal film may be adopted.

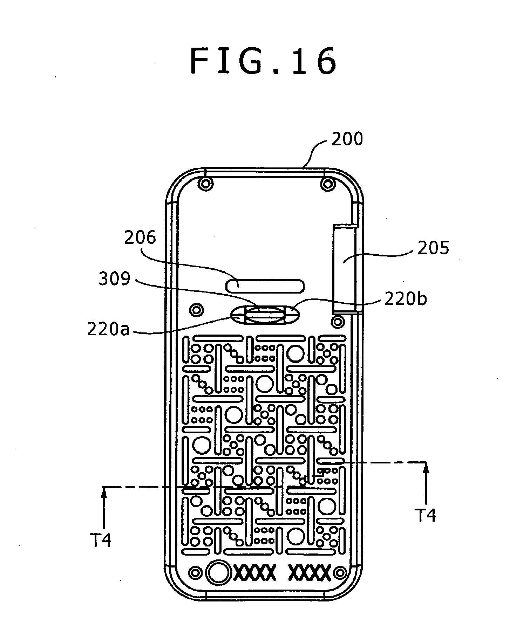

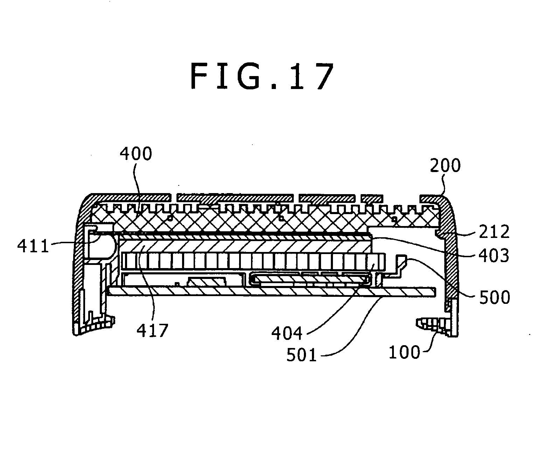

FIG. 16 is a plan view of a cellular phone according to one embodiment. A sectional view, taken along line T4-T4, of the cellular phone is shown in FIG. 17. It is to be noted that, in FIG. 17, for simplification, the key operating part 101 is omitted. In FIG. 17, as a heat releasing structure, the heat transfer sheet 411 is put in close contact with the anode plate of the fuel cell unit 400 so that the heat generated in the fuel cell unit 400 is transmitted through the heat transfer sheet 411 and radiated from the lower case 200. Further, a metal film may be formed on the inner surface of the lower case 200 by plating. The heat transfer gel sheet described referring to FIG. 14D may be interposed between the metal film and the cathode-plate-side surface of the fuel cell unit 400. Furthermore, the heat transfer gel sheet 417 described referring to FIG. 15 is disposed between the fuel cell control circuit board 403 and the secondary battery 404, whereby release of heat in the thickness direction is effected.

### [Air intake structure]

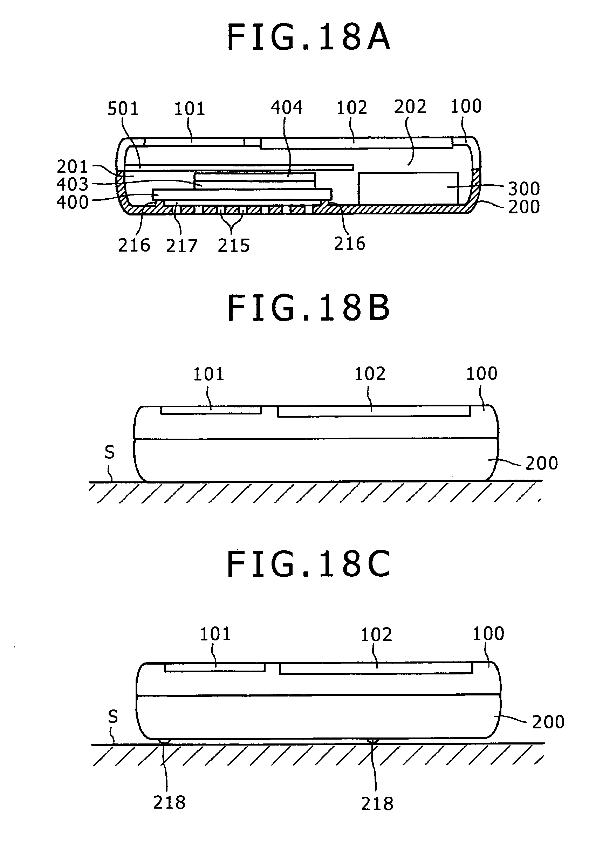

FIG. 18A schematically shows a section of a cellular phone. The fuel cell unit 400 is stored in the fuel cell storing part 201 inside the lower case 200, and the fuel cartridge 300 is stored in the fuel cartridge storing part 202. The fuel cell control circuit board 403 is mounted on the anode plate of the fuel cell unit 400, and the secondary battery 404 is mounted on the board 403. The main substrate 501 is disposed on the upper side of the secondary battery 404. Further, the key operating part 101 and the liquid crystal display 102 are attached to the upper case 100. Furthermore, a porous member, for example, a porous sheet of a fluorine-based material (e.g., PTE), activated carbon material, etc. may be disposed on that inner surface of the lower case 200 which faces the cathode plate of the fuel cell unit 400. The porous sheet has a function of preventing intrusion of dust or water from the exterior and maintaining moisture at a cathode electrode part.

That casing portion of the lower case 200 which faces the cathode plate of the fuel cell unit 400 is provided with a multiplicity of air intake holes 215, as uniformly as possible. The open area ratio of the air intake holes 215 in the casing portion is set in the range of 20 to 40%, from the viewpoint of both its purpose and strength of the case. Further, for maintaining the strength in the case where the air intake holes 215 are formed, the lower case 200 is formed with ribs at positions opposed to the boundaries of the power generating parts of each fuel cell. Further, it is desirable that the layout pattern of the air intake hole 215 coincides, as much as possible, with the pattern of slit-like openings formed in the cathode plate. Furthermore, in-plane diffusion of air can be secured by providing a gap between the cathode plate and the inner surface of the lower case 200. Consequently, even in the case where the air intake holes 215 are partly closed, the quantity of air (oxygen) supplied to the fuel cell unit 400 can be prevented from becoming deficient.

As shown in FIG. 18A, projections 216 are provided at the inner surface of the lower case 200, whereby a gap 217 with a height of, for example, about 0.5 mm is formed between a principal surface on the side of the cathode plate and the inner surface of the lower case 200. In-plane diffusion of air occurs in the gap 217. The projections 216 are formed at such positions as not to overlap with the opening parts formed in the principal surface on the side of the cathode plate.

As shown in FIG. 18B, the cellular phone may be placed with its lower case 200 facing a surface S such as a top surface of a desk. If the air intake holes 215 are closed with the surface S, the quantity of air taken in would be deficient, leading to a lowering in the output of the fuel cell. In view of this, a measure is taken to prevent the air intake holes 215 from being closed, even when the cellular phone is put with the air intake holes 215 facing down. Specifically, as shown in FIG. 18C, the outer surface of the lower case 200 is formed with a plurality of raised parts 218 so as to secure a gap t between the outer surface of the lower case 200 and a surface of a desk or the like. For instance, the cellular phone is supported by the raised parts 218 formed at three positions. The center of gravity of the cellular phone is located inside a triangle formed by interconnecting the raised parts 218 at three positions by straight line segments, whereby the cellular phone is supported stably.

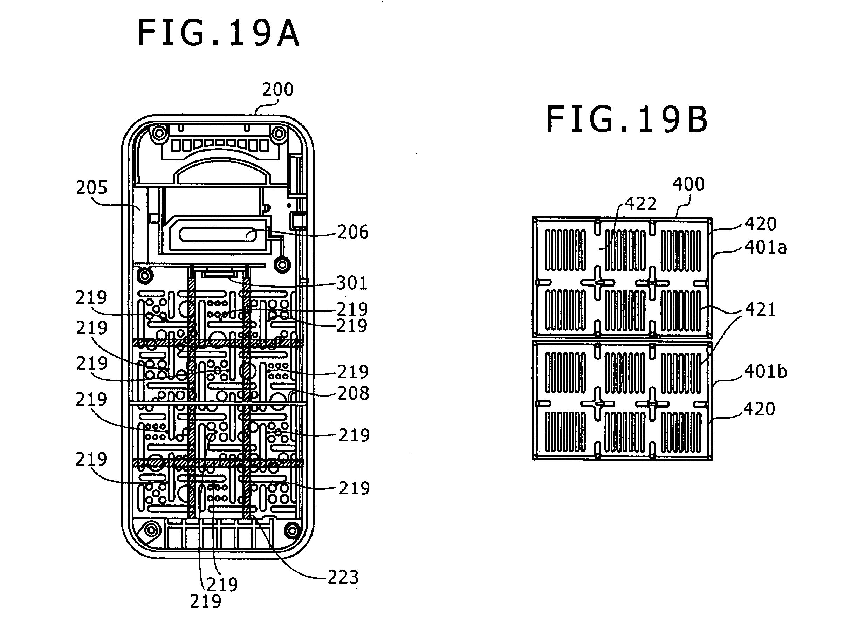

The air intake structure will now be described more in detail. FIG. 19A shows the structure of the inner surface of the lower case 200. As shown in FIG. 19B, the respective cathode plates 420 of the fuel cells 401a and 401b in the fuel cell unit 400 are provided with a multiplicity of slit-shaped cathode holes 421. Air is taken in through the cathode holes 421. Each fuel cell has a configuration in which, for example, six power generating parts are arranged two-dimensionally and are connected in series with one another. Seven mutually parallel cathode holes 421 are formed correspondingly to each of the power generating parts. Further, a grid pattern region 422 demarcating the power generating parts is formed.

The lower case 200 is formed with air intake holes 215 similar in shape to the cathode holes 421, at positions corresponding to the cathode holes 421 in the condition where the fuel cells 401a and 401b are stored in the fuel cell storing part. As indicated by shading in FIG. 19A and as shown in FIG. 9 used in the above description, the inner surface of the lower case 200 is formed with a grid pattern rib 223 (which corresponds to the above-mentioned projections 216) in a region corresponding to the grid pattern region 422. In other words, a top portion of the grid pattern rib 223 is in contact with the grid pattern region 422 where the cathode holes 421 are not formed, so that a gap 217 can be formed. The grid pattern rib 223 reinforces the lower case 200, whereby it is ensured that the lower case 200 will not easily be deflected in the thickness direction.

Furthermore, as shown in FIG. 9 and FIG. 19A, projections 219 are provided at the inner surface of the lower case 200, on the basis of each of blocks where the six power generating parts are located respectively. The position where each projection 219 is formed is located at a roughly central position of each block and at a position where neither the air intake hole 215 nor the cathode hole 421 is formed. The projections 219 are provided for restraining deflection of the lower case 200 in the thickness direction when the lower case 200 is pushed. Top portions of the projections 219 face the cathode plate, with a minute gap therebetween.

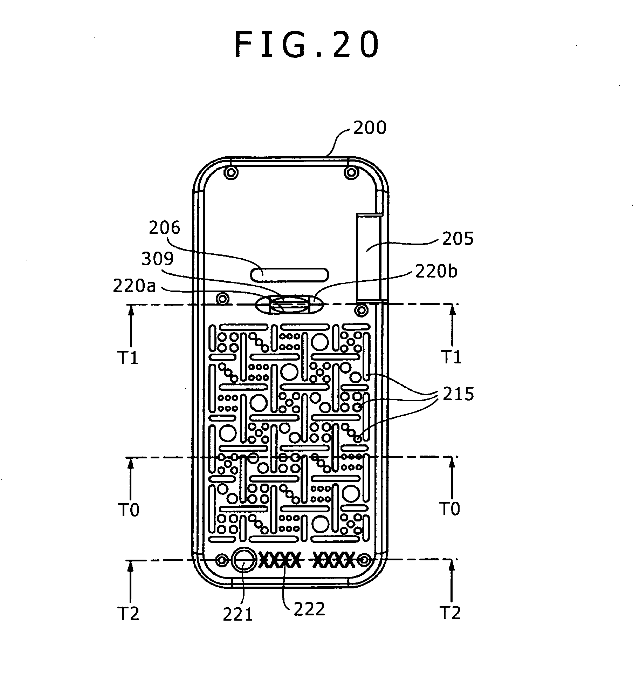

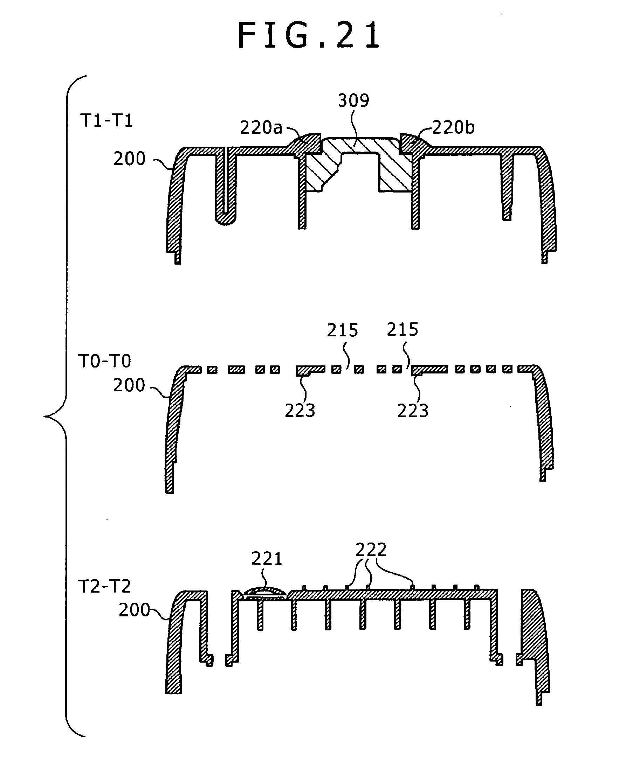

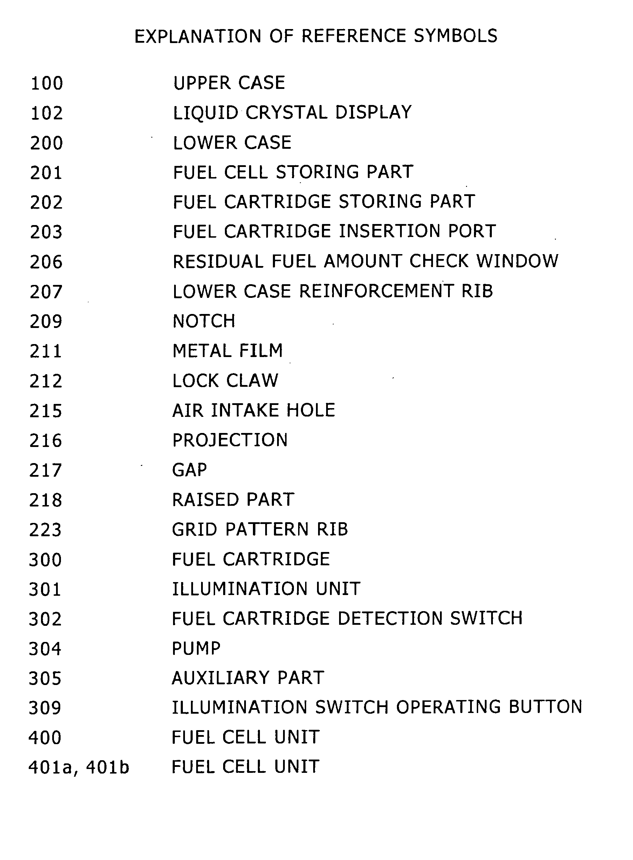

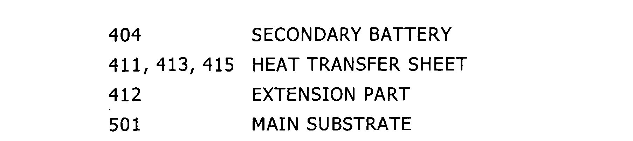

FIG. 20 shows the outer surface of the lower case 200. Sections of the lower case 200 along line T0-T0, line T1-T1, and line T2-T2 are shown in FIG. 21. The air intake holes 215 and the grid pattern rib 223 are shown in the sectional view taken along line T0-T0.

In the sectional view along line T1-T1, on the upper side, of the region where the air intake holes 215 are formed, there is shown an illumination switch button 309 constituting the illumination unit 301. With the illumination switch button 309 depressed to the lower side, the illumination switch is turned ON, and the light emitting diode provided on the illumination unit substrate 308 is turned ON, whereby the fuel cartridge 300 is illuminated. Raised parts 220a and 220b are formed respectively at the left and right sides of the illumination switch button 309. The tip of the illumination switch button 309 is located below the top portions of the raised parts 220a and 220b. The raised parts 220a and 220b prevent the illumination switch from being turned ON when the lower case 200 is placed on a surface of a desk or the like.

At the position of line T2-T2, on the lower side, of the region where the air intake holes 215 are formed, there are formed a badge (mark) 221 of the maker, the sales company or the like and a logo 222 in the state of being projected like relief. In the sectional view along line T2-T2 in FIG. 21, there are shown the badge 221 and logo 222 which are raised.

When the cellular phone is placed on a flat surface of a desk or the like, with the lower case 200 on the lower side, a gap is secured beneath the lower case 200 owing to the raised parts 220a and 220b as well as the badge 221 and the logo 222. Therefore, the air intake holes 215 can be prevented from being closed. Thus, a situation in which the quantity of oxygen taken in is deficient and the output of the fuel cell is thereby lowered can be obviated.

The present invention is not limited to the above-described embodiment, and various modifications are possible based on the technical thought of the invention. For instance, a porous member, for example, a porous sheet may be disposed in the gap between the cathode plate of the fuel cell unit 400 and the lower case 200. The porous sheet has a function of preventing intrusion of dust, without hampering intake of air. Furthermore, the present invention is applicable not only to cellular phones but also to such portable electronic apparatuses as PDA, portable game machines, etc.

## Claims

1. A fuel cell storing structure, comprising:
a fuel cell which includes an anode electrode supplied with a fuel, a cathode electrode supplied with air, a membrane and electrode assembly held between the anode electrode and the cathode electrode, and an anode plate-shaped member stacked on the anode electrode;
a fuel supplying part configured to reserve the fuel and supply the anode electrode with the fuel;
a casing which defines a fuel cell storing space for storing the fuel cell; and
a heat transfer sheet one end portion of which is set in contact with an outer surface of the anode plate-shaped member and an other end portion of which is extended to the exterior of the fuel cell storing space and set in contact with an inner surface of the casing.

2. A fuel cell storing structure, comprising:
a fuel cell which includes an anode electrode supplied with a fuel, a cathode electrode supplied with air, a membrane and electrode assembly held between the anode electrode and the cathode electrode, and a cathode plate-shaped member stacked on the cathode electrode and provided with an air vent hole;
a fuel supplying part configured to reserve the fuel and supply the anode electrode with the fuel;
a casing which defines a fuel cell storing space for storing the fuel cell; and
a metal film formed on an inner surface of that casing portion which faces the cathode plate-shaped member.

3. The fuel cell storing structure according to claim 2, wherein a claw configured to press the cathode plate-shaped member against the metal film is provided in the fuel cell storing space.

4. The fuel cell storing structure according to claim 3, wherein a claw configured to press the cathode plate-shaped member against the metal film through a heat-conductive elastic member is provided in the fuel cell storing space.

5. A fuel cell storing structure, comprising:
a fuel cell which includes an anode electrode supplied with a fuel, a cathode electrode supplied with air, a membrane and electrode assembly held between the anode electrode and the cathode electrode, and an anode plate-shaped member stacked on the anode electrode;
a fuel supplying part configured to reserve the fuel and supply the anode electrode with the fuel;
a casing which defines a fuel cell storing space for storing the fuel cell;
a circuit board stacked on the anode plate-shaped member; and
an electric energy accumulating part stacked on the circuit board.

6. The fuel cell storing structure according to claim 5, wherein one end portion of a heat transfer sheet is held between the anode plate-shaped member and the circuit board, and an other end portion of the heat transfer sheet is extended to the exterior of the fuel cell storing space and set in contact with an inner surface of the casing.

7. The fuel cell storing structure according to claim 5, wherein a heat-conductive gel is packed between a surface on one side of the circuit board and an opposed surface.

8. An electronic apparatus, comprising:
a fuel cell which includes an anode electrode supplied with a fuel, a cathode electrode supplied with air, a membrane and electrode assembly held between the anode electrode and the cathode electrode, and an anode plate-shaped member stacked on the anode electrode;
a fuel supplying part configured to reserve the fuel and supply the anode electrode with the fuel;
a casing which defines a fuel cell storing space for storing the fuel cell; and
a wiring board supporting thereon a circuit supplied with power source from the fuel cell,
which are stored inside the casing;
wherein one end portion of a heat transfer sheet is set in contact with an outer surface of the anode plate-shaped member, and an other end portion of the heat transfer sheet is extended to the exterior of the fuel cell storing space and set in contact with an inner surface of the casing.

9. An electronic apparatus, comprising:
a fuel cell which includes an anode electrode supplied with a fuel, a cathode electrode supplied with air, a membrane and electrode assembly held between the anode electrode and the cathode electrode, and an anode plate-shaped member stacked on the anode electrode;
a fuel supplying part configured to reserve the fuel and supply the anode electrode with the fuel;
a casing which defines a fuel cell storing space for storing the fuel cell; and
a wiring board supporting thereon a circuit supplied with power source from the fuel cell,
which are stored inside the casing;
wherein a metal film making contact with the cathode plate-shaped member is formed on an inner surface of a portion of the casing.

10. An electronic apparatus, comprising:
a fuel cell which includes an anode electrode supplied with a fuel, a cathode electrode supplied with air, a membrane and electrode assembly held between the anode electrode and the cathode electrode, and an anode plate-shaped member stacked on the anode electrode;
a fuel supplying part configured to reserve the fuel and supply the anode electrode with the fuel;
a casing which defines a fuel cell storing space for storing the fuel cell;
a circuit board stacked on the anode plate-shaped member; and
an electric energy accumulating part stacked on the circuit board.

11. A fuel cell storing structure, comprising:
a fuel cell which includes an anode electrode supplied with a fuel, a cathode electrode supplied with air, a membrane and electrode assembly held between the anode electrode and the cathode electrode, and a cathode plate-shaped member stacked on the cathode electrode and provided with air vent holes;
a fuel supplying part configured to reserve the fuel and supply the anode electrode with the fuel;
a casing which defines a fuel cell storing space for storing the fuel cell;
an air intake hole formed in a casing portion facing the cathode plate-shaped member; and
a projection formed at an inner surface of the casing portion so as to secure a gap between the cathode plate-shaped member and the casing portion which face each other.

12. The fuel cell storing structure according to claim 11,
wherein the fuel cell has a plurality of rectangular power generating parts arranged two-dimensionally, the plurality of power generating parts being connected in series;
the air vent holes in the plurality of power generating parts are partitioned by a grid pattern; and
the projection is a grid pattern rib formed correspondingly to the grid pattern.

13. The fuel cell storing structure according to claim 12, wherein another projection is further formed in each of regions in which the respective air vent holes of the plurality of power generating parts are formed, the another projection being formed correspondingly to a position where the air vent hole is not formed.

14. The fuel cell storing structure according to claim 11, comprising a porous part disposed between the cathode plate-shaped member and the casing portion which face each other.

15. An electronic apparatus, comprising:
a fuel cell which includes an anode electrode supplied with a fuel, a cathode electrode supplied with air, a membrane and electrode assembly held between the anode electrode and the cathode electrode, and a cathode plate-shaped member stacked on the cathode electrode and provided with air vent holes;
a fuel supplying part configured to reserve the fuel and supply the anode electrode with the fuel; and
a wiring board supporting thereon a circuit supplied with power source from the fuel cell is mounted,
which are stored inside a casing;
wherein an air intake hole is formed in a casing portion facing the cathode plate-shaped member; and
a projection configured to secure a gap between the cathode plate-shaped member and the casing portion which face each other is formed at an inner surface of the casing portion.

16. A fuel cell storing structure, comprising:
a fuel cell which includes an anode electrode supplied with a fuel, a cathode electrode supplied with air, a membrane and electrode assembly held between the anode electrode and the cathode electrode, and a cathode plate-shaped member stacked on the cathode electrode and provided with an air vent hole;
a fuel supplying part configured to reserve the fuel and supply the anode electrode with the fuel;
a casing which defines a fuel cell storing space for storing the fuel cell;
an air intake hole formed in a casing portion facing the cathode plate-shaped member; and
a plurality of raised parts formed at an outer surface of the casing portion.

17. The fuel cell storing structure according to claim 16, wherein the plurality of raised parts are provided in that region in the periphery of the casing portion in which the air intake hole is not formed.

18. The fuel cell storing structure according to claim 16, wherein the raised parts are formed in the periphery of an operating part of an operating switch so as to be higher than the operating part.

19. The fuel cell storing structure according to claim 16, wherein the raised parts represent a mark, a character, or a symbol.

20. An electronic apparatus, comprising:
a fuel cell which includes an anode electrode supplied with a fuel, a cathode electrode supplied with air, a membrane and electrode assembly held between the anode electrode and the cathode electrode, and a cathode plate-shaped member stacked on the cathode electrode and provided with an air vent hole;
a fuel supplying part configured to reserve the fuel and supply the anode electrode with the fuel;
a wiring board supporting thereon a circuit supplied with power source from the fuel cell,
which are stored inside a casing;
wherein an air intake hole is formed in a casing portion facing the cathode plate-shaped member; and
a plurality of raised parts are formed at an outer surface of the casing portion.
